# EUROPÄISCHE PATENTSCHRIFT

(11) **EP 0 909 960 B1**
(45) Veröffentlichungstag und Bekanntmachung des Hinweises auf die Patenterteilung: **07.12.2005**
(21) Anmeldenummer: 98117090.5
(22) Anmeldetag: 10.09.1998
(51) Int. Cl.: G01S 15/04, G01S 15/87, G08B 13/16

(54) **Ultraschall-Überwachungseinrichtung zum Überwachen eines kfz-Innenraumes**
Ultrasound monitoring device to monitor the interior of a motor vehicle
Dispositif de surveillance ultrasonore pour surveiller l'habitacle d'un véhicule à moteur

(30) Priorität: 16.09.1997 DE 19740639
(43) Veröffentlichungstag der Anmeldung: 21.04.1999
(73) Patentinhaber: Delphi Automotive Systems Deutschland GmbH, D-42369 Wuppertal (DE)
(72) Erfinder: Klimm, Christian, 51647 Gummersbach (DE)
(74) Vertreter: Cohausz & Florack

(56) Entgegenhaltungen:
- WO-A-92/02831
- DE-A- 19 524 781
- DE-A- 19 524 782
- DE-C- 19 735 423
- US-A- 3 898 640
- US-A- 4 991 146
- "albar mk II-a bfs" ELEKTOR, Bd. 3, Nr. 5, - 31. Mai 1977 Seiten 5-52-5-55, XP002097119 CANTERBURY.; GB

## Beschreibung

Die Erfindung betrifft eine Ultraschall-Überwachungseinrichtung zum Überwachen eines Kfz-Innenraumes bestehend aus mindestens zwei Empfangs- und mindestens zwei Sendeelementen sowie einer Signalverarbeitungselektronik zur Ansteuerung der Empfangs- und Sendeelemente und zur Auswertung der vom Innenraum reflektierten Signale.

Eine Vorrichtung der eingangs genannten Art ist aus der EP 0 541 565 bekannt.

Bei dieser bekannten Einrichtung sind die Sendeelemente und die Empfangselemente jeweils an der oder nahe der Innenoberfläche des Kfz-Daches, und zwar jeweils mehr oder weniger im Bereich der sogenannten B-Holme, also im Bereich der zwischen den vorderen großen Seitenscheiben und den hinteren großen Seitenscheiben liegenden Holmen angebracht. Die Hauptachsen der Hauptkeulen der Richtcharakteristiken der Sende- bzw. Empfangselemente sind so justiert, daß das eine Sendeelement auf dem einen B-Holm mit einem gegenüberliegenden Empfangselement in einem B-Holm zusammenwirkt. Dieses Sender-/ Empfängerpaar überwacht beispielsweise bevorzugt die alarmrelevanten Bereiche der vorderen Hälfte des Kfz-Innenraumes, zum Beispiel die scheibennahen vorderen Kfz-Bereiche.

Das zweite Sendeelement überwacht zusammen mit dem gegenüberliegenden zweiten Empfangselement bevorzugt die alarmrelevanten Bereiche der hinteren Hälfte des Kfz-Innenraumes, z.B. die scheibennahen hinteren Kfz-Bereiche. Bei dieser bekannten Lösung beinhaltet ein am selben B-Holm angordnetes Sensormodul stets mindestens einen Sender und mindestens einen Empfänger. Die Steuerung einer solchen Anordnung erfolgt über die Signalverarbeitungselektronik, welche sowohl die Beaufschlagung der Sendeelemente mit Ultraschallimpulsen steuert als auch ausgehend von dem von den Empfängern erfaßten reflektierten Signal eine Auswertung und Bewertung hinsichtlich einer Alarmgebung vornimmt.

Eine solche Vorrichtung arbeitet in einem zeitlich gemultiplexten Betrieb, d.h., die mindestens zwei Sendeelemente werden nacheinander aktiviert. Damit eine gegenseitige Beeinflussung der Sender herabgesetzt wird, muß der zeitliche Mindestabstand zwischen dem Aussenden aus unterschiedlichen Sendeelementen typischerweise 50 ms betragen. Diese Größenordnung ergibt sich dadurch, daß das letzte ausgesandte Echo des vorhergehenden Sendeelementes verklungen sein muß, bevor das nächste Sendeelement angesteuert wird. Werden nun mehrere Sendeelemente in ein solches System eingebunden, so entsteht bei jeder Messung eine Pausenzeit von mindestens 50 ms, um die gegenseitige Beeinflussung möglichst herabzusetzen. Ein aus mehreren Ultraschallsendern bestehendes System benötigt also eine vergleichsweise große Zeit für die Überwachungswiederholung. Wenn zusätzlich mit einer solchen Anordnung ein großer Raum überwacht werden soll, für den eine Vielzahl von Sensoren nötig sind, entstehen lange Zykluszeiten von beispielsweise bis zu einer Sekunde, so daß sich eine Möglichkeit der Manipulation innerhalb dieser Zeit ergeben kann. Insbesondere bei großem Überwachungsvolumen werden daher solche Alarmsysteme von den Versicherungen nicht anerkannt.

Ein anderes Verfahren zur Überwachung von Kfz-Innenräumen mittels Ultraschall ist aus der DE 34 32 292 bekannt. Hierbei werden vom Ultraschallsender Bursts mit einer bestimmten Frequenz bzw. Leistung erzeugt und die vom Empfänger erfaßten Signale für die Raumantwort als ein sogenanntes "Raummuster" in den Mikroprozessor einer Auswerteeinrichtung eingelesen. Die Analyse des Raummusters erfolgt dadurch, daß der Ultraschallempfänger mit einem Hüllkurvenmodulator verbunden ist. In jeder Periode erfolgt eine einmalige Anregung des zu überwachenden Innenraumes mit den Ultraschallbursts, so daß in jeder Periode fortlaufend Signale neuerer Raummuster eingelesen werden, wobei die jeweils neuen Raummuster mit dem ursprünglichen Raummuster verglichen werden und bei Veränderungen des Raummusters über ein vorgegebenes Maß hinaus ein Alarm ausgelöst wird.

Ein anderes Verfahren zur Ultraschall-Raumüberwachung ist aus dem deutschen Patent 195 21 511 bekannt. Hierbei wird innerhalb der Periodendauer ein Doppelpuls (zwei Signalbursts) gesendet, deren Abstand so gewählt ist, daß unmittelbar nach der Erfassung der vom vorhergehenden Signalburst hervorgerufenen Raumantwort das nächste Signalburst gesendet wird und daß die, zu zwei aufeinanderfolgenden Signalbursts gehörenden Raumantworten miteinander verglichen werden, wobei bei einer Unterschreitung der zulässigen Abweichung zwischen beiden Hüllkurvensignalen eine Sendepause bis zum Ende der Periodendauer erfolgt und bei Erreichen bzw. einer Überschreitung der zulässigen Abweichung die Ansteuerung einer nachgeordneten Einrichtung zur weiteren Analyse des Vergleichssignals erfolgt.

Ein weiteres Verfahren zur Überwachung von Kfz-Innenräumen ist aus der EP 0 457 661 A1 bekannt. Der Ultraschalldetektor enthält eine Betriebsart Senden und eine Betriebsart Empfangen einer Ultraschallwelle, die sich in einem Volumen wie dem Fahrgastraum einen Fahrzeugs in zeitweiligen Aktivierungsfenstern ausbreitet. Die Form der Aktivierungsfenster wird zur Reduzierung des Stromverbrauchs geregelt.

Ein weiteres Verfahren zur Raumüberwachung mittels Schallwellen offenbart die US 3,898,640 A. Hier wird in dem zu überwachenden Raum ein ungerichtetes Schallwellenfeld erzeugt und empfangen. Die zur Anregung des Raumes verwendeten Schallwellen können dabei auch Wellenlängen annehmen, die in der Größenordnung der Wellenlänge des Raumes liegt, so dass Stehwellen erzeugt werden.

Der Erfindung liegt die Aufgabe zugrunde, eine Ultraschall-Überwachungseinrichtung mit geringem Energieverbrauch zu schaffen, die eine störungsunabhängige Überwachung großer Räume ermöglicht.

Diese Aufgabe wird erfindungsgemäß gelöst durch die Merkmale des Patentanspruchs 1, bevorzugte Ausführungsformen gehen aus den Unteransprüchen hervor.

Die Erfindung zeichnet sich dadurch aus, daß in einer ersten Betriebsart durch den gleichzeitigen Betrieb aller angeschlossenen Sendeelemente eine entsprechend lange Zykluszeit vermieden wird. Vielmehr wird durch das gleichzeitige Ansteuern aller Sendeelemente der gesamte Raumbereich innerhalb der Einschaltphase aller Sendeelemente überdeckt. Der nächste gemeinsame Ansteuervorgang der Sendeelemente kann dann z.B. bereits nach weiteren 50 ms erfolgen. Hierdurch ergibt sich also eine Herabsetzung der "Schlupflochzeit" gegenüber den bekannten Systemen von mehr als einer Größenordnung.

Bevorzugt ist vorgesehen, daß alle Sendeelemente mit der exakt gleichen Frequenz senden und eine feste Phasenbeziehung zwischen allen Sendeelementen besteht. Die erfindungsgemäße Lösung bietet also den Vorteil, auch sehr große zusammenhängende Räume innerhalb kurzer Reaktionszeiten und mit hoher Zuverlässigkeit zu überwachen. Im übrigen weist die Anlage in ihrem ersten Betriebszustand durch einen geringen Energieverbrauch auf.

Die Erfindung zeichnet sich weiterhin dadurch aus, daß in einer zweiten Betriebsart das vom Innenraum reflektierte Signal von der Signalverarbeitungselektronik als Stehwellensignal detektiert wird, wobei Mittel in der Signalverarbeitungselektronik vorgesehen sind zur Frequenzanalyse der Hüllkurve des Stehwellensignals. Diese Art der Signalanalyse bedeutet, daß die Sender gleichzeitig mit einem CW (continuous wave)- Signal beaufschlagt werden, d.h. im Dauer-Betrieb arbeiten, so daß sich im zu überwachenden Raum eine Ultraschallstehwelle ausbildet. Die Stehwelle kann sehr viel genauer auf die mögliche Alarmursache hin untersucht werden als die herkömmlichen Raumantwortsignale beim unterbrochenen Betrieb, z.B. Puls-Echo-Verfahren (DE 34 32 292). Durch frequenzselektive Analyse der Stehwelle können beispielsweise Störeinflüsse, wie Temperaturänderungen im zu überwachenden Raum oder Hagelschlag, von einbruchbedingten Effekten unterschieden werden.

Die Erfindung wird im folgenden anhand eines Ausführungsbeispieles näher erläutert.

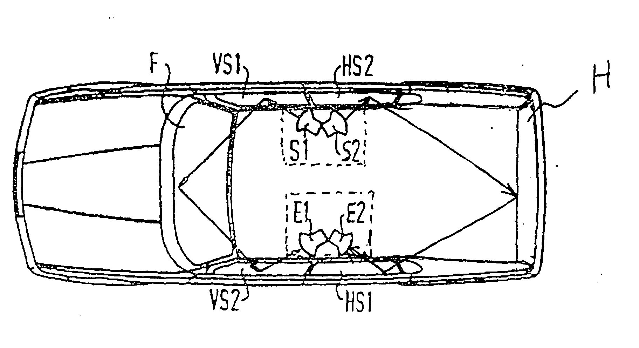

Die einzige Figur zeigt den Innenraum eines Kfz's in Draufsicht, welcher durch die Frontscheibe F, die Seitenscheiben VS1,HS2,HS1,VS2 und durch die Heckscheibe H begrenzt wird. Es handelt sich hierbei um ein Kombi-Fahrzeug. Die im Bereich der B-Holme, also im Bereich der zwischen den vorderen großen Seitenscheiben VS1,VS2 und den hinteren großen Seitenscheiben HS1,HS2 liegenden Holmen angebrachten Sender S1,S2 bzw. Empfänger E1,E2 arbeiten paarweise miteinander gekoppelt.

So deckt das Sender-/ Empfängerpaar S₁,E₁ den vorderen Teil des Innenraumes und das Sender-/ Empfängerpaar S₂,E₂ den hinteren Bereich des Kombi-Fahrzeuges ab.

Die Ansteuerung der Sendeelemente S₁,S₂ mittels der Signalverarbeitungselektronik erfolgt nun in der Gestalt, daß beide Sendeelemente S₁,S₂ mit derselben Frequenz und fester Phasenlage zueinander betrieben angesteuert werden. Hierdurch werden beide genannten Raumbereiche gleichzeitig mit Ultraschallwellen beaufschlagt und von den jeweils zugeordneten Empfangselementen E₁,E₂ die reflektierte Ultraschallstrahlung erfaßt.

Die Auswertung der empfangenen Ultraschallstrahlung ist wie folgt:

In der ersten Betriebsart werden beide Sendeelemente S₁,S₂ synchron betrieben. Dabei senden der Sender S₁ und der Sender S₂ jeweils einen Ultraschallburst einer Länge von 400 µs aus. Dies bedeutet bei einer Ultraschallfrequenz von 40 kHz, daß 16 Rechteckimpulse im Burst enthalten sind. Anschließend vergeht eine Pause von etwa 2 ms, in der der jeweilige Burst abklingen kann. Anschließend werden Meßwerte für das reflektierte Ultraschallsignal von den Empfängern E₁ bzw. E₂ erfaßt und nach Auswertung ihrer Hüllkurve an einen Mikroprozessor ausgegeben. Dabei beträgt die Meßdauer 32 ms, so daß von jedem Empfänger E₁,E₂ 160 Meßwerte mit einer jeweiligen Breite von 200 µs eingelesen werden können. Diese Meßwertanzahl ist ausreichend, um auch Objekte zu erreichen, die erst nach mehrmaligen Reflexionen vom Schall erfaßt werden.

50 ms nach der ersten, oben beschriebenen Anregung erfolgt eine zweite Anregung durch Ultraschallburstimpulse, wiederum durch die Sender S₁,S₂ synchron. Die von den Empfängern E₁ bzw. E₂ empfangenen und vom Mikroprozessor aufbereiteten Hüllkurvensignale werden miteinander verglichen.

Wenn die Abweichung der empfangenen Signale aufeinanderfolgender Bursts vernachlässigbar gering ist, erfolgt eine Sendepause bis zu Beginn der nächsten Periode, wobei die gesamte Periodendauer üblicherweise bei 500 ms liegt.

Es ist dann davon auszugehen, daß kein alarmfälliges Ereignis stattgefunden hat, so daß eine entsprechende Energieeinsparung durch Ausnutzung der Pausenzeit erreicht werden kann.

Bei Feststellung einer signifikanten Differenz zwischen den empfangenen Signalen aufeinanderfolgender Reflexionssignale erfolgt eine Betriebsartumschaltung der beiden Sender-/ Empfängerpaare.

Nach der Umschaltung sendet der Sender S₁ im Dauerstrichbetrieb Ultraschall und die hierdurch erzeugte Ultraschallstehwelle wird vom Empfänger E₂ erfaßt. Der Meßzeitraum hierfür beträgt ca. 192 ms, wobei bei einem Abtastintervall von 200 µs 960 Meßwerte aufgenommen werden. Die anschließende Frequenzanalyse des vom Empfänger E₂ erfaßten Signals ist charakterisiert durch eine untere und eine obere Grenzfrequenz, wobei unterhalb der unteren Grenzfrequenz liegende Änderungen im niederfrequenten Bereich auf temperaturbedingte Änderungseffekte schließen lassen. Oberhalb der oberen Grenzfrequenz liegende Änderungen ergeben sich beispielsweise unter dem Einfluß von Hagelschlag oder klirrenden Ursachen. Beide genannten Einflüsse müssen daher unterschieden werden von tatsächlich alarmbedingenden Ursachen, beispielsweise einer Bewegung innerhalb des Fahrgastraumes. Solche Ursachen bzw. Ereignisse führen zu Frequenzänderungen innerhalb der beiden Grenzfrequenzen.

Nach Ablauf der Stehwellenanalysedauer erfolgt ein Umschalten auf Sender S₂ und Empfänger E₁. Hierdurch ergibt sich eine höhere Empfindlichkeit in den Abschattungsbereichen hinter den Fahrersitzen, da ein bestimmter Raumbereich jeweils nur von einem der beiden Sender S₁,S₂ abgedeckt wird.

Der ständige Wechsel zwischen den Transducern erfolgt entweder solange, bis die Frequenzanalysefunktion einen signifikanten Effekt zwischen den Grenzfrequenzen aufweist, so daß es zum Alarm kommt, oder bis ein Zähler einen oberen Zählwert erreicht hat, der vorher eingestellt wurde.

Ist dieser Zählwert erreicht, kann davon ausgegangen werden, daß das zuvor zur Umschaltung der Betriebsarten geführte Alarmanzeichen kein für ein Einbruch maßgebliches Signal war, sondern durch Temperatureffekte oder sonstige Fehlursachen bedingt war. Daraufhin kehrt das System in den ersten Betriebszustand zurück.

Hierdurch ergibt sich einerseits der Vorteil, daß sich durch den Wechsel von Sender und Empfänger im Dauerstrichbetrieb eine erhöhte Lebensdauer der Gesamteinheit ergibt, da jedes der beiden Sender-/Empfängerpaare gleichmäßig belastet wird.

Der entscheidende Vorteil besteht aber darin, daß sich durch die Frequenzanalyse des Hüllkurvensignalverlaufs beim Stehwellenverfahren die Möglichkeit ergibt, einbruchssignifikante Effekte von Störursachen, wie Temperaturschwankungen oder Hagelschlag zu unterscheiden. Diese Frequenzanalyse findet jedoch nur dann statt, wenn dies aufgrund der "Grobanalyse" im Puls-Echo-Betrieb angezeigt erscheint. Im übrigen zeichnet sich die Anlage in ihrem ersten Betriebszustand durch einen geringen Energieverbrauch aus.

## Patentansprüche

1. Ultraschall-Überwachungseinrichtung zum Überwachen eines Kfz-Innenraumes bestehend aus mindestens zwei Empfangs- (E₁,E₂) und mindestens zwei Sendeelementen (S₁,S₂) sowie einer Signalverarbeitungselektronik zur Ansteuerung der Empfangs- und Sendeelemente und zur Auswertung der vom Innenraum reflektierten Signale, **dadurch gekennzeichnet, daß** in einer ersten Betriebsart die mindestens zwei Sendeelemente während mindestens eines Teiles der Betriebsdauer synchron zueinander arbeiten und dabei das vom Innenraum reflektierte Signal nach dem Puls-Echo-Verfahren oder dem Doppelpuls-Echo-Verfahren ausgewertet wird, und daß in einer zweiten Betriebsart das vom Innenraum reflektierte Signal von der Signalverarbeitungselektronik als Stehwellensignal detektiert wird.

2. Ultraschall-Überwachungseinrichtung nach Anspruch 1, **dadurch gekennzeichnet, daß** die Sendeelemente in der ersten Betriebsart gleichzeitig mit gleicher Frequenz angesteuert werden.

3. Ultraschall-Überwachungseinrichtung nach Anspruch 2, **dadurch gekennzeichnet, daß** in der ersten Betriebsart zwischen den Sendeelementen eine feste Phasenbeziehung besteht.

4. Ultraschall-Überwachungseinrichtung nach Anspruch 1, **dadurch gekennzeichnet, daß** Mittel in der Signalverarbeitungselektronik vorgesehen sind zur Frequenzanalyse der Hüllkurve des Stehwellensignals.

5. Verwendung einer Vorrichtung nach einem der vorhergehenden Ansprüche zur Überwachung von großen Innenräumen, beispielsweise von Kombi-Fahrzeugen oder Transportern.

## Claims

1. Ultrasound monitoring device for monitoring the interior of a motor vehicle, consisting of at least two receiving (E₁, E₂) and at least two transmitting elements (S₁, S₂) and signal processing electronics for activating the receiving and transmitting elements and for evaluating the signals reflected from the interior, **characterised in that** in a first operating mode the at least two transmitting elements work synchronously to one another for at least part of the length of operation and at the same time the signal reflected from the interior is evaluated according to the pulse echo method or the double pulse echo method and **in that** in a second operating mode the signal reflected from the interior is detected by the signal processing electronics as a standing wave signal.

2. Ultrasound monitoring device according to claim 1, **characterised in that** the transmitting elements are activated in the first operating mode simultaneously at the same frequency.

3. Ultrasound monitoring device according to claim 2, **characterised in that** there is a fixed phase relationship between the transmitting elements in the first operating mode.

4. Ultrasound monitoring device according to claim 1, **characterised in that** means are provided in the signal processing electronics for frequency analysis of the envelope of the standing wave signal.

5. Use of a device according to one of the preceding claims for monitoring large interiors, for example of estate cars or transporters.

## Revendications

1. Dispositif de surveillance à ultrasons pour la surveillance du volume intérieur d'un véhicule automobile, composé d'au moins deux éléments récepteurs (E₁, E₂) et d'au moins deux éléments émetteurs (S₁, S₂), ainsi que d'une électronique de traitement des signaux destinée à activer les éléments récepteurs et éléments émetteurs et à exploiter des signaux réfléchis en provenance du volume intérieur, **caractérisé en ce que**, dans un premier mode de fonctionnement, les aux moins deux éléments émetteurs travaillent en synchronisme entre eux pendant au moins une partie de la durée du fonctionnement et, dans cette action, le signal réfléchi en provenance du volume intérieur est exploité selon le procédé impulsion-écho ou selon le procédé double impulsion-écho, et **en ce que**, dans un deuxième mode de fonctionnement, le signal réfléchi en provenance du volume intérieur est détecté par l'électronique de traitement des signaux sous la forme d'un signal en onde stationnaire.

2. Dispositif de surveillance à ultrasons selon la revendication 1, **caractérisé en ce que**, dans le premier mode de fonctionnement, les éléments émetteurs sont activés simultanément avec la même fréquence.

3. Dispositif de surveillance à ultrasons selon la revendication 2, **caractérisé en ce que**, dans le premier mode de fonctionnement, il existe une relation de phase fixe entre les éléments émetteurs.

4. Dispositif de surveillance à ultrasons selon la revendication 1, **caractérisé en ce qu'**il est prévu dans l'électronique de traitement des signaux des moyens pour l'analyse de la fréquence de la courbe enveloppe du signal en onde stationnaire.

5. Utilisation d'un dispositif selon une des revendications précédentes pour surveiller de grands volumes intérieurs, par exemple de limousines commerciales ou de véhicules de transport.
